# EUROPÄISCHE PATENTSCHRIFT

(11) **EP 3 206 846 B1**
(45) Veröffentlichungstag und Bekanntmachung des Hinweises auf die Patenterteilung: **13.05.2020**
(21) Anmeldenummer: 15780855.1
(22) Anmeldetag: 14.10.2015
(51) Int. Cl.: B29C 31/08, B29C 70/08, B29C 70/24, D05C 15/18, B29K 105/04, D05C 15/20

(54) **VORRICHTUNG SOWIE VERFAHREN ZUM BEREITSTELLEN VON VERSTÄRKUNGSSTRANGSCHLAUFEN**
APPARATUS AND METHOD FOR PROVIDING REINFORCEMENT STRAND LOOPS
DISPOSITIF ET PROCÉDÉ POUR LA PRÉPARATION DE BOUCLES DE BRIDE DE RENFORCEMENT

(30) Priorität: 14.10.2014 DE 102014014961
(43) Veröffentlichungstag der Anmeldung: 23.08.2017
(73) Patentinhaber: Airbus Defence and Space GmbH, 81663 Ottobrunn (DE); Airbus Operations GmbH, 21129 Hamburg (DE)
(72) Erfinder: ENDRES, Gregor, 85276 Pfaffenhofen/Ilm (DE); WEBER, Hans-Jürgen, 27283 Verden (DE)
(74) Vertreter: Isarpatent
(86) Internationale Anmeldenummer: PCT/EP2015/073772
(87) Internationale Veröffentlichungsnummer: WO 2016/059110

(56) Entgegenhaltungen:
- WO-A1-2013/029121
- DE-A1-102009 050 906

## Beschreibung

Die Erfindung betrifft zunächst eine Vorrichtung zum Bereitstellen von Verstärkungsstrangschlaufen für ein Vielnadelsystem zur mechanischen Armierung eines Bauteils aus einem Schaumkunststoff.

Darüber hinaus hat die Erfindung ein Verfahren zum Bereitstellen von Verstärkungsstrangschlaufen für ein Vielnadelsystem zur mechanischen Armierung eines Bauteils aus einem Schaumkunststoff, insbesondere mittels einer erfindungsgemäßen Vorrichtung, zum Gegenstand.

Aus dem Stand der Technik sind Schaumarmierungstechnologien (Sting-Tech™) zur mechanischen Verstärkung von Bauteilen aus Schaumkunststoffen bekannt. Die Armierung kann beispielsweise mit Verstärkungssträngen aus gebündelten oder sonst wie räumlich angeordneten Kohlenstofffasern bzw. Kohlenstofffaserfilamenten erfolgen. Aus dem Verstärkungsstrang gebildete Verstärkungsstrangschlaufen werden zu diesem Zweck mit Hilfe von Nadeln durch das Bauteil aus dem Schaumkunststoff gezogen. Abschließend können beide Seiten des z. B. plattenförmigen Bauteils mit Deckschichten versehen werden. Derartige Bauteile weisen eine außerordentlich hohe mechanische Belastbarkeit bei einem geringen Gewicht und einer im Vergleich zu anderen Kernstrukturen zugleich hervorragenden Impact-Toleranz auf. Solche Bauteile mit armierten Schaumkunststoffen können heutzutage mit Ein- und Vielfachnadelsystemen unter Verwendung von geeigneten Verstärkungssträngen in großserientauglicher und kostengünstiger Weise gefertigt werden.

Derartige Vielfachnadelsysteme verwenden aktuell einen einzelnen Verstärkungsstrang als Vorlage für sämtliche Nadeln bzw. die "Greifer". Dadurch ist es nicht notwendig, für jede einzelne Nadel einen separaten Verstärkungsstrang vorzuhalten, was zu einer signifikanten Reduktion des konstruktiven Aufwands führt. Unter bestimmten Bedingungen, wie z. B. bei einer zu hohen inneren Spannung des Verstärkungsstrangs, zu kurzen Prozesszeiten oder einer zu hohen Empfindlichkeit des eingesetzten Verstärkungsstrangs, ist jedoch der Einsatz eines einzelnen Verstärkungsstrang zur Schlaufenbildung nicht mehr möglich.

Die WO 2013/019121 A1 beschreibt ein Verfahren zum Herstellen eines Polteppichs, wobei ein Polgarn mittels eines Polgarnhalters mit einem Primärträger verbunden wird und der Polganrhalter eine Anzahl von Polgarnführungskanälen in einer matrixähnlichen Konfiguration umfasst.

Aufgabe der Erfindung ist es daher, eine räumlich kompakte, leicht zu integrierende, zuverlässige sowie schnell taktbare Vorrichtung anzugeben, die es ermöglicht, jeder Nadel eines Vielnadelsystems zur Schaumstoffarmierung eine eigene Verstärkungsstrangschlaufe vorzulegen. Darüber hinaus ist es eine Aufgabe der Erfindung, ein Verfahren zum effizienten Betrieb einer derartigen Vorrichtung anzugeben.

Diese Aufgabe wird gelöst durch eine Vorrichtung gemäß Anspruch 1, 2, 3 oder 4.

Hierdurch lassen sich Verstärkungsstrangschlaufen mit präzise reproduzierbaren Abmessungen mit hoher Taktung erzeugen und einem Vielnadelsystem vorlegen. Daneben weist die Vorrichtung einen einfachen und robusten Aufbau auf. Zudem kann die Vorrichtung räumlich kompakt realisiert werden, so dass sie sich leicht in vorhandene Vielnadelsysteme integrieren lässt.

Im Fall einer günstigen technischen Weiterbildung ist der Profilkörper um die Längsmittelachse drehbar. Infolge des bevorzugt in Relation zum ortsfesten Schieber drehbaren Profilkörpers ist ein einfacher konstruktiver Aufbau gegeben. Alternativ kann der Schieber so ausgestaltet sein, dass dieser den in einer solchen Konstellation ortsfesten Profilkörper umrundet bzw. umkreist.

Bei einer weiteren vorteilhaften Ausgestaltung ist der Profilkörper in Winkelschritten von 360°/n um seine Längsmittelachse verdrehbar, wobei n eine natürliche Zahl ist, die gleich oder größer Zwei ist. Hierdurch befindet sich der Profilkörper stets in einer räumlich definierten und durch wiederholte Drehungen um Winkelschritte in einer exakt reproduzierbaren Position in Bezug zu dem Vielnadelsystem. In der Regel entspricht die Variable n der Anzahl der Seitenflächen bzw. der Längskanten des Profilkörpers.

Nach Maßgabe einer günstigen Weiterentwicklung schließen die Trenneinrichtungen in einer Ruhestellung bündig mit dem Profilkörper ab und ragen in einer Arbeitsstellung zumindest teilweise aus dem Profilkörper heraus. Hierdurch wird eine mechanische Beschädigung des zumindest abschnittsweise an der Umfangsfläche des Profilkörpers anliegenden Verstärkungsstrangs vermieden.

Nach Maßgabe einer weiteren günstigen Ausgestaltung ist der Zuführeinrichtung eine Spanneinheit, insbesondere zur Vergleichmäßigung der mechanischen Spannung des Verstärkungsstrangs, zugeordnet. Hierdurch wird ein schlaffes Durchhängen des der Vorrichtung zugeführten Verstärkungsstrangs vermieden.

Bei einer weiteren günstigen Fortbildung ist vorgesehen, dass die Klemmen mittels eines Exzenters betätigbar sind. Hierdurch ist eine einfache und mechanisch zuverlässige Ansteuerung der Klemmen gewährleistet. Im Fall von mehreren, parallel angeordneten Vorrichtungen können deren Exzenter mittels einer Königswelle angetrieben werden. Alternativ oder ergänzend kann eine voll autonome Ansteuerung zumindest einzelner Klemmen erfolgen.

Bei einer weiteren Ausgestaltung der Vorrichtung ist vorgesehen, dass mindestens eine weitere Klemme umfangsseitig am Profil-körper angeordnet ist. Hierdurch kann ein (neuer) Anfang des Verstärkungsstrangs zum Erzeugen der nächsten Verstärkungsstrangschlaufe am Profilkörper fixiert werden.

Eine erste Ausführungsform der Vorrichtung ist so beschaffen, dass:
a. der Profilkörper eine näherungsweise gerade prismatische Form mit mindestens drei Seitenflächen aufweist,
b. jede der mindestens drei Seitenflächen eine mittig zu dieser und parallel zur Längsmittelachse verlaufende Vertiefung zur zumindest teilweisen Aufnahme des Schiebers aufweist,
c. jeweils zwei Klemmen beidseits jeder Vertiefung an dem Profilkörper positioniert sind, und
d. mindestens eine Trenneinrichtung im Bereich jeder der mindestens drei Längskanten des Profilkörpers integriert ist.
e. Infolge dieser Ausgestaltung sind kleinere Winkelschritte von 360°/n, wobei n der Zahl der Seitenflächen des Profilkörpers entspricht, und damit eine schnelle Taktung der Vorrichtung möglich.

Eine zweite Ausführungsform der Vorrichtung ist so beschaffen, dass
a. der Profilkörper eine näherungsweise quaderförmige Form aufweist,
b. jede von zwei Längsseiten des Profilkörpers eine mittig zu dieser und parallel zur Längsmittelachse verlaufende Vertiefung zur zumindest teilweisen Aufnahme des Schiebers aufweist,
c. jeweils zwei Klemmen im Bereich jeder Längsseite beidseits zu jeder Vertiefung an dem Profilkörper positioniert sind, und
d. jeweils mindestens eine Trenneinrichtung in jeder Schmalseite des Profilkörpers integriert ist.

Hierdurch ist ein konstruktiv besonders einfacher Aufbau der Vorrichtung gegeben, der eine geringere Anzahl von Klemmen und Trenneinrichtungen erfordert.

Eine dritte Ausführungsform der Vorrichtung ist so beschaffen, dass
a. der Profilkörper eine näherungsweise zylindrische Form aufweist,
b. der Profilkörper zwei diametral angeordnete sowie parallel zur Längsmittelachse verlaufende Vertiefungen zur zumindest teilweisen Aufnahme des Schiebers aufweist,
c. zwei Klemmen jeweils beidseits an jeder der Vertiefungen an dem Profilkörper positioniert sind, und
d. eine Trenneinrichtung jeweils zwischen zwei benachbarten Klemmen in den Profilkörper integriert ist.

Hierdurch kann der Profilkörper mit einem besonders geringen Fertigungsaufwand hergestellt werden, wobei zugleich in Bezug zu dessen Längsmittelachse eine besonders hohe Symmetrie gegeben ist.

Eine vierte Ausführungsform der Vorrichtung ist so beschaffen, dass
a. der Profilkörper eine näherungsweise gerade prismatische Form mit mindestens drei Seitenflächen aufweist,
b. jede der mindestens drei Seitenflächen eine mittig zu dieser und parallel zur Längsmittelachse verlaufende Vertiefung zur zumindest teilweisen Aufnahme des Schiebers aufweist,
c. jeweils zwei Klemmen beidseits zu jeder Vertiefung an einer Stirnseite des Profilkörpers positioniert sind, und
d. mindestens eine Trenneinrichtung im Bereich jeder der mindestens drei Ecken der Stirnseite des Profilkörpers integriert ist.

Bei dieser Ausführungsform der Vorrichtung kann der Verstärkungsstrang leichter in die Klemmen eingeführt und durch diese geführt werden.

Darüber hinaus wird die erfindungsgemäße Aufgabe durch ein Verfahren zum Bereitstellen von Verstärkungsstrangschlaufen für ein Vielnadelsystem zur mechanischen Armierung eines Bauteils aus einem Schaumkunststoff, erfindungsgemäß mittels einer Vorrichtung nach mindestens einem der Patentansprüche 1 bis 10, mit den folgenden Schritten gelöst:
a. Fixieren eines ersten Schenkels der auszubildenden Verstärkungsstrangschlaufe mittels einer ersten Klemme am Profilkörper,
b. Verfahren des Schiebers parallel zur Längsmittelachse des Profilkörpers zum Erzeugen der Verstärkungsstrangschlaufe,
c. Fixieren eines zweiten Schenkels der Verstärkungsstrangschlaufe am Profilkörper mit Hilfe einer weiteren von der ersten Klemme umfangsseitig beabstandet am Profilkörper positionierten Klemme,
d. Abtrennen des zwischen den Klemmen eingespannten Verstärkungsstrangs zum Erzeugen der Verstärkungsstrangschlaufe mittels der mindestens einen Trenneinrichtung derart, dass eine Nadel und/oder ein Greifer des Vielnadelsystems die Verstärkungsstrangschlaufe aufnehmen kann,
e. Nachführen des Verstärkungsstrangs (72),
f. Wiederholen der Schritte a) bis e).

Hierdurch können Verstärkungsstrangschlaufen mit hoher Taktung und Maßhaltigkeit erzeugt und einem Vielnadelsystem vorgelegt werden. Im Allgemeinen entspricht die Variable n der Anzahl der Seitenflächen bzw. der Längskanten des Profilkörpers.

Im Fall einer günstigen Weiterbildung wird der Profilkörper zum Nachführen des Verstärkungsstrangs im Verfahrensschritt e) um einen Winkelschritt von 360° geteilt durch n unter gleichzeitigem Abziehen des Verstärkungsstrangs von einer Zuführeinrichtung verdreht, wobei n eine natürliche Zahl ist, die gleich oder größer als 2 ist. Hierdurch befindet sich ein Profilkörper mit n Seitenflächen nach n Winkelschritten stets wieder in seiner Ausgangs- bzw. Basisposition in Bezug zum Vielnadelsystem.

Nach Maßgabe einer günstigen Ausgestaltung wird der Verstärkungsstrang im Verfahrensschritt d) vor dem Abtrennen mittels mindestens einer weiteren Klemme am Profilkörper fixiert. Hierdurch wird ein (neuer) Anfang des Verstärkungsstrangs für die Bildung der nächsten Verstärkungsstrangschlaufe am Profilkörper gesichert.

Bei einer vorteilhaften Weiterbildung des Verfahrens wird ein axialer Weg des Schiebers ausgehend von seiner Ruhestellung bis zum Erreichen der Arbeitsstellung so eingestellt, dass eine Verstärkungsstrangschlaufe mit einer vorgegebenen Länge erzeugt wird. Hierdurch können Verstärkungsstrangschlaufen für Bauteile mit einer lokal variierenden Materialstärke erzeugt werden. Die effektive Länge einer Verstärkungsstrangschlaufe entspricht hierbei in etwa der Hälfte des vom Verstärkungsstrang abgetrennten Abschnitts.

In der Zeichnung tragen dieselben konstruktiven Elemente jeweils die gleiche Bezugsziffer bzw. Bezeichnung.

In der Zeichnung zeigt:
- Figur 1: eine schematische Darstellung eines Vielnadelsystems zur Armierung eines Schaumkunststoffbauteils mit Verstärkungsstrangschlaufen mit Hilfe einer erfindungsgemäßen Vorrichtung,
- Figur 2: eine stark schematische Draufsicht auf eine erste Ausführungsform der Vorrichtung,
- Figur 3: die Vorrichtung von Fig. 2 mit einem eingefädelten Verstärkungsstrang,
- Figur 4: eine Seitenansicht auf die Vorrichtung von Fig. 3 mit einem Schieber in einer Ruhestellung,
- Figur 5: die Vorrichtung von Fig. 4 mit dem Schieber in einer Arbeitsstellung zur Ausbildung einer Verstärkungsstrangschlaufe,
- Figur 6: eine Tabelle zur Erläuterung des Verfahrensverlaufs zum Erzeugen einer Verstärkungsstrangschlaufe mittels der Vorrichtung von Fig. 1 bis 5,
- Figur 7: eine schematische Draufsicht auf eine zweite Ausführungsform der Vorrichtung,
- Figur 8: eine schematische Draufsicht auf eine dritte Ausführungsform der Vorrichtung, und
- Figur 9: eine schematische Draufsicht auf eine vierte Ausführungsform der Vorrichtung.

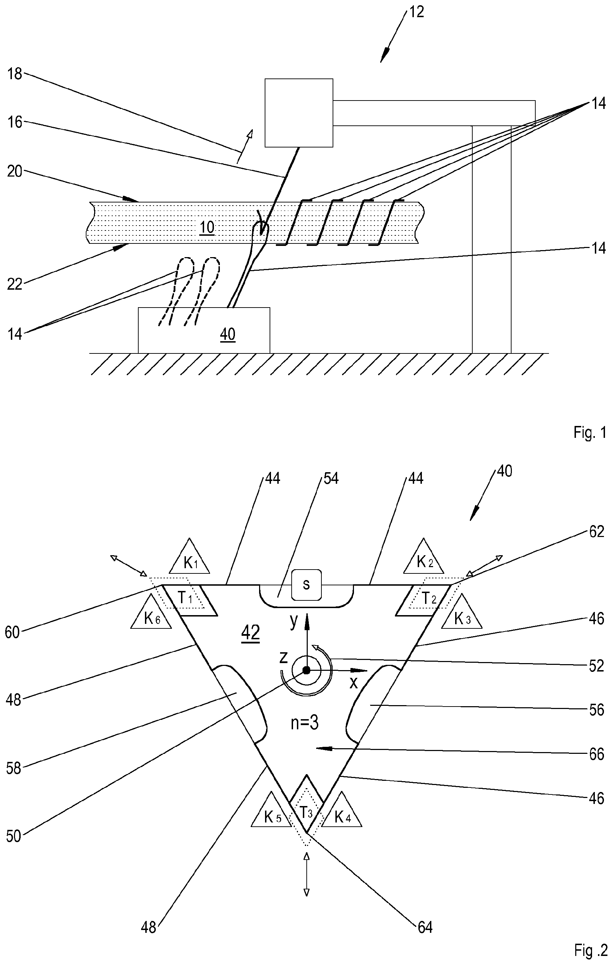

Die Fig. 1 zeigt eine schematische Darstellung eines Vielnadelsystems zur Armierung eines Schaumkunststoffbauteils mit Verstärkungsstrangschlaufen mit Hilfe einer erfindungsgemäßen Vorrichtung.

Ein Bauteil 10 aus einem Schaumkunststoff wird mit Hilfe eines Vielnadelsystems 12 mit einer Vielzahl von Verstärkungsstrangschlaufen 14 verstärkt bzw. armiert. Zu diesem Zweck zieht das Vielnadelsystem 12 mindestens eine Verstärkungsstrangschlaufe 14 mit Hilfe der hier lediglich dargestellten einen Nadel 16 in Richtung des schwarzen Pfeils 18 durch das Bauteil 10, wobei nicht bezeichnete Enden der Verstärkungsstrangschlaufen an der Oberseite 20 sowie der Unterseite 22 des Bauteils 10 umgelegt bzw. auf andere Art und Weise fixiert werden. Die Vorlage der Verstärkungsstrangschlaufen 14 für das Vielnadelsystem 12 erfolgt mittels der erfindungsgemäßen Vorrichtung 40. Die Verstärkungsstrangschlaufen 14 können z. B. Rovings aus gebündelten oder geflochtenen Kohlenstofffasern sein. Alternativ können auch schmale bandförmige oder strangförmige Verstärkungsstrangschlaufen, z. B. aus verwebten, verflochtenen, verzwirnten, verdrillten, schlauchförmig gestrickten, schlauchförmig gewirkten oder anderen räumlichen Anordnungen von Kohlenstofffasern, zum Einsatz kommen.

In einem weiteren, nicht dargestellten Fertigungsschritt können auf die Oberseite 20 und die Unterseite 22 des Bauteils 10 ggfls. nicht dargestellte Decklagen aus einem faserarmierten Kunststoff aufgebracht werden, wodurch ein mechanisch hochbelastbarer Verbund zwischen dem Bauteil 10 aus dem Schaumkunststoff, den Verstärkungsstrangschlaufen 14 und den Decklagen entsteht.

Die Fig. 2 zeigt eine stark schematische Draufsicht auf eine erste Ausführungsform der Vorrichtung. Eine erste Ausführungsform einer erfindungsgemäßen Vorrichtung 40 verfügt unter anderem über einen Profilkörper 42 mit einer regulären prismatischen Form mit hier exemplarisch n gleich drei Seitenflächen 44, 46, 48, woraus sich eine Querschnittsgeometrie ergibt, die der eines gleichseitigen Dreiecks entspricht. Der Profilkörper 42 ist um eine Längsmittelachse 50, die hier beispielhaft mit der z-Achse eines nicht bezeichneten Koordinatensystems zusammenfällt, ausgehend von der gezeigten horizontalen (Basis-)Position in diskreten Winkelschritten in Richtung eines Drehpfeils 52 drehbar. Die Größe der Winkelschritte beträgt jeweils 360° geteilt durch n, wobei n der Anzahl der Seitenflächen 44, 46, 48 entspricht, hier also gleich der natürlichen Zahl Drei ist. Hierdurch verläuft nach jedem Winkelschritt von 120° eine der Seitenflächen 44, 46, 48 parallel zur zx-Ebene des Koordinatensystems. Durch das Erhöhen von n kann z. B. ein gerader Profilkörper mit einer größeren Anzahl von Seitenflächen geschaffen werden, der eine gleichmäßige vieleckige Querschnittsgeometrie aufweist. Prinzipiell kann die Variable n im Fall eines prismatischen Profilkörpers jede natürliche Zahl sein, die gleich oder größer Drei ist.

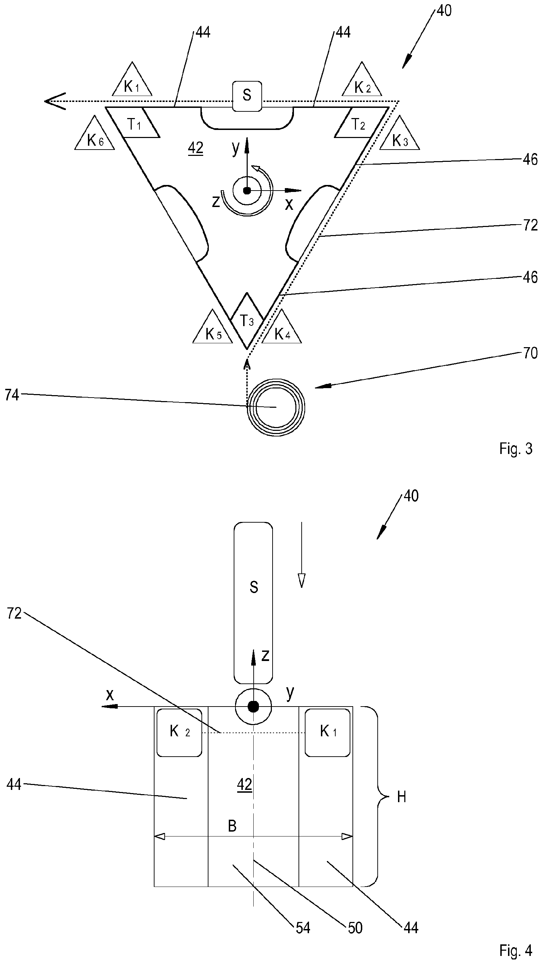

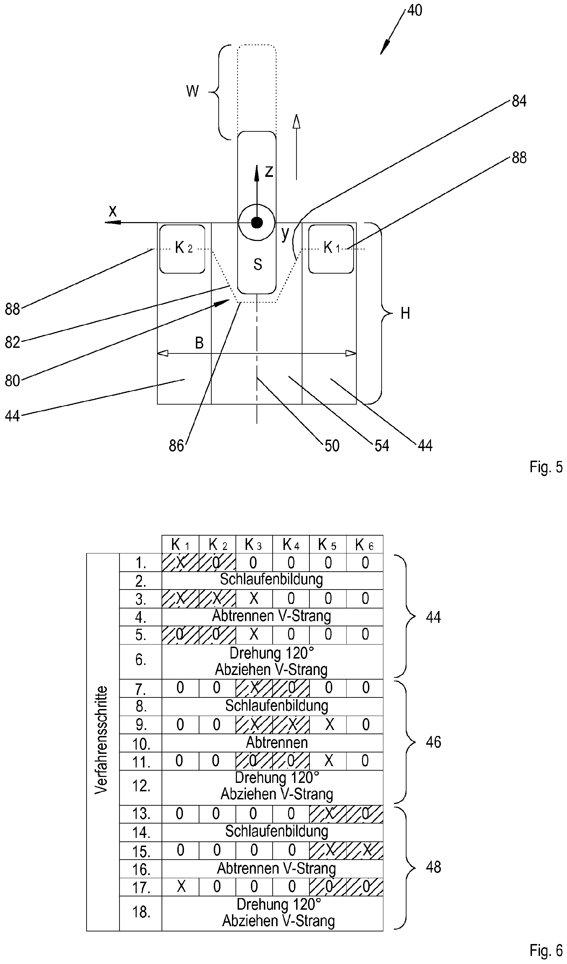

In jeder Seitenfläche 44, 46, 48 befindet sich mittig eine durchgehende Vertiefung 54, 56, 58, die zur Aufnahme eines parallel zur Längsmittelachse 50 verschiebbaren Schiebers S dient. Der abgesehen von seiner axialen Verschiebbarkeit in Bezug zum Profilkörper 42 ortsfeste Schieber S ist zum Erzeugen der Verstärkungsstrangschlaufen notwendig. Der Schieber S kann eine Querschnittsgeometrie aufweisen, die von der hier lediglich exemplarisch dargestellten rechteckigen Querschnittsgeometrie abweicht. Die Vertiefungen 54, 56, 58 erstrecken sich vorzugsweise über eine hier nicht eingezeichnete Höhe H des Profilkörpers 42 in Richtung der z-Achse, d. h. die Vertiefungen 54, 56, 58 sind durchgehend in Bezug zu Längserstreckung des Profilkörpers 42 ausgeführt und können eine von der hier gezeigten gekrümmt-konkaven abweichende Querschnittsgeometrie aufweisen (vgl. insb. Fig. 4, 5).

Beidseits der drei Vertiefungen 54, 56, 58 bzw. beidseits von drei Längskanten 60, 62, 64 sind an den Seitenflächen 44, 46, 48 umfangsseitig jeweils zwei Klemmen K_{1,2}, K_{3,4} sowie K_{5,6} angeordnet, die zum Fixieren eines hier nicht dargestellten und im Fall dieser Ausführungsform umfangsseitig auf dem Profilkörper 42 abgelegten Verstärkungsstrangs dienen. Hierbei sind die Klemmenpaare K_{6,1}, K_{2,3} sowie K_{4,5} umfangsseitig unmittelbar benachbart und lediglich durch die Längskanten 60, 62, 64 voneinander getrennt Die Klemmen K_{1,...,6} können grundsätzlich eine beliebige konstruktive Ausgestaltung aufweisen, solange eine Beschädigung des durch diese am Profilkörper 42 fixierten Verstärkungsstrangs ausgeschlossen ist.

Im Bereich der drei Längskanten 60, 62, 64 ist ferner jeweils eine Trenneinrichtung T_{1,2,3} in den Profilkörper 42 integriert. Die drei Trenneinrichtungen T_{1,2,3} zum abschnittsweisen Abtrennen des Verstärkungsstrangs liegen bevorzugt innerhalb des Profilkörpers 42, d. h. unterhalb der hier lediglich sichtbaren Stirnseite 66. Die Trenneinrichtungen T_{1,2,3} können mit jeder beliebigen Schneidtechnologie, wie zum Beispiel der Klingen-Widerlager-Technik, zwei beweglichen Scherenklingen, rotierenden Diamantscheiben etc., realisiert sein. Weiterhin kann der Verstärkungsstrang z. B. durch Hochdruckwasserstrahlschneiden oder im Fall unbrennbarer Verstärkungsstränge ggfls. durch Laserstrahlschneiden oder Heizdrahtschneiden vom restlichen Verstärkungsstrang zum Erzeugen der Verstärkungsstrangschlaufen abgetrennt werden.

Zur Betätigung der Trenneinrichtungen T_{1,2,3} werden diese z. B. - wie mit den drei kleinen schwarzen Doppelpfeilen und den punktierten Umrissen der Trenneinrichtungen T_{1,...,3} jeweils angedeutet - radial in Bezug zur z-Achse des Koordinatensystems aus- und eingefahren. In der mit gestrichelten Linien angedeuteten Ruhestellung der Trenneinrichtungen T_{1,2,3} schließen diese bündig mit dem Profilkörper 42 ab, während die drei Trenneinrichtungen T_{1,2,3} in ihrer mit punktierten Linien angedeuteten Arbeitsstellung zum Abtrennen einer Verstärkungsstrangschlaufe aus dem Profilkörper 42 herausragen.

Die Ansteuerung der hier exemplarisch sechs Klemmen K_{1,...,6} sowie der drei Trenneinrichtungen T_{1,2,3} erfolgt mittels mindestens eines nicht dargestellten Exzenters in Abhängigkeit von der jeweiligen Drehposition des Profilkörpers 42 in Bezug zur z-Achse. Bei dem Vielnadelsystem 12 können mittels einer Vielzahl gleichartig aufgebauter Vorrichtungen 40 zeitgleich mehrere Verstärkungsstrangschlaufen erzeugt und vorgelegt werden, wobei die synchrone Steuerung der Klemmen und der Trenneinrichtungen der einzelnen Vorrichtungen mit Hilfe einer Königswelle erfolgen kann. Alternativ oder ergänzend ist auch eine individuelle Ansteuerung mindestens einer Klemme K_{1,...,6} und/oder mindestens einer Trenneinrichtung T_{1,2,3} möglich, wobei eine entsprechende Anzahl elektromechanischer Aktoren, die von einer elektronischen Steuer- und/oder Regeleinheit angesteuert werden, vorzusehen ist. Grundsätzlich kann - in Abhängigkeit von den umsetzbaren Größenabmessungen des Profilkörpers 42 und der Anzahl der Seitenflächen bzw. Längskanten - eine in weiten Grenzen variable Anzahl von Klemmen K und Trenneinrichtungen T vorgesehen sein. Wenn n die Zahl der Seitenflächen des regulären prismatischen Profilkörpers 42 ist, so sind in der Regel n ≥ 3 Trenneinrichtungen sowie n ≥ 2*n Klemmen am Profilkörper 42 vorhanden.

Die Anzahl n der Seitenflächen eines prismatischen Profilkörpers der Vorrichtung 40 wird letztendlich nur durch die von der Anzahl der anzusteuernden Klemmen und Trenneinrichtungen sowie der hierdurch bedingten mechanischen Komplexität und die Größe des insgesamt für diese Komponenten zur Verfügung stehenden Einbauraums begrenzt. Ein größeres n ermöglicht kleinere Winkelschritte bei der Rotation des Profilkörpers, so dass mittels der Vorrichtung Verstärkungsstrangschlaufen in kürzeren Taktzeiten erzeugt und vorgelegt werden können.

Die Fig. 3 zeigt die Vorrichtung von Fig. 2 mit einem eingefädelten Verstärkungsstrang. Die Vorrichtung 40 verfügt ferner über eine in der Fig. 2 nicht eingezeichnete Zuführeinrichtung 70 zur automatischen Zuführung eines endlosen Verstärkungsstrangs 72. Der Verstärkungsstrang 72 ist in der gezeigten Winkelposition des Profilkörpers 42 in Bezug zum Koordinatensystem exemplarisch zwischen der Seitenfläche 46 und den Klemmen K_{3,4} sowie der Seitenfläche 44 und den Klemmen K_{1,2} eingefädelt, wobei sich sämtliche Klemmen K_{1,...,6} noch in der abgehobenen bzw. gelösten Stellung von Fig. 2 befinden. Für den Fall, dass z. B. eine der Klemmen K_{1,...,4} angezogen ist, wird bei jedem Winkelschritt um 120° des Profilkörpers 42 der Verstärkungsstrang 72 selbsttätig von einer Vorratsspule 74 der Zuführeinrichtung 70 abgezogen und auf den Seitenflächen 44, 46 abgelegt. Die Zuführeinrichtung 70 verfügt ferner über eine nicht dargestellte Spanneinheit, bei der es sich im einfachsten Fall um eine Bremse zur Drehzahlbeeinflussung der Vorratsspule 74 beim Abziehen des Verstärkungsstrangs 72 handelt. Infolge der Spanneinheit ist beim Abziehen des Verstärkungsstrangs 72 stets ein straffer, geradliniger Verlauf desselben gewährleistet, wobei der Verstärkungsstrang 72 immer unter einer definierten und konstanten inneren mechanischen Spannung steht.

Die Fig. 4 und 5 - auf die im weiteren Verlauf der Beschreibung zugleich Bezug genommen wird - illustrieren eine Seitenansicht auf die Vorrichtung von Fig. 3, wobei sich der Schieber zum Erzeugen einer Verstärkungsstrangschlaufe axial aus seiner Ruhestellung gemäß der Fig. 4 bis in eine Arbeitsstellung nach Maßgabe von Fig. 5 verschiebt .

Eine Breite B der Seitenfläche 44 und der beiden anderen, hier nicht sichtbaren Seitenflächen des Profilkörpers 42, entspricht beispielhaft in etwa einer Höhe H des Profilkörpers 42. In der Stellung von Fig. 4 befindet sich der Schieber S in seiner Ruhestellung, d. h. in einer vollständig aus der Vertiefung 54 des Profilkörpers 42 herausgezogenen Position. Der Verstärkungsstrang 72 ist mittels der Klemme K₁ am Profilkörper 42 fixiert, während die Klemme K₂ noch gelöst ist. Entsprechendes gilt für die hier verdeckten Klemmen K_{3,4} (vgl. insb.

Fig. 3), so dass der Verstärkungsstrang 72 die Klemmen K_{2,3,4} widerstandsfrei passieren kann. Beim axialen Verfahren des Schiebers S wird somit der Verstärkungsstrang 72 weiter von der hier nicht dargestellten Zuführeinrichtung abgezogen (vgl. insb. Fig. 3).

Zum Erzeugen einer Verstärkungsstrangschlaufe 80 wird der Schieber S parallel zur z-Achse in Richtung eines kleinen schwarzen Pfeils, d. h. in Richtung des Profilkörpers 42 verschoben, bis der Schieber S die in Fig. 5 exemplarisch gezeigte Arbeitsstellung eingenommen hat und eine in etwa trapezförmige Verstärkungsstrangschlaufe 80 mit einem ersten und einem zweiten Schenkel 82, 84 sowie einem diese verbindenden Basisabschnitt 86 erzeugt ist. Der Schieber S wird soweit axial in die Vertiefung 54 des Profilkörpers 42 eingefahren, bis die Verstärkungsstrangschlaufe 80 die gewünschten Abmessungen, insbesondere eine vorgegebene Gesamtlänge, erreicht. Durch die Variation des vom Schieber S bei der Schlaufenbildung zurückgelegten Weges W lässt sich die Gesamtlänge der erzeugten Verstärkungsstrangschlaufe 80 bzw. eines vom Verstärkungsstrang 80 abgetrennten Abschnitts 88 leicht auf ein vorgegebenes Maß einstellen.

Nach dem Erzeugen der Verstärkungsstrangschlaufe 80 wird zumindest noch die Klemme K₃ aktiviert bzw. angezogen, wodurch ein neues, nach dem Abtrennvorgang der Verstärkungsstrangschlaufe 80 entstehendes, freies Ende des Verstärkungsstrangs 72 am Profilkörper 42 gesichert ist.

Abschließend wird eine der, hier gleichfalls verdeckten, Trenneinrichtungen T_{1,2,3} in geeigneter Weise betätigt, so dass die fertige Verstärkungsstrangschlaufe 80 von einer Nadel und/oder einem Greifer des Vielnadelsystems abgehoben und durch ein Bauteil aus Schaumkunststoff hindurch gezogen werden kann (vgl. insb. Fig. 1).

Fig. 6 zeigt eine Tabelle zur Erläuterung des Verfahrensverlaufs zum Erzeugen einer Verstärkungsstrangschlaufe mittels der Vorrichtung von Fig. 1 bis 5. In der Stellung der Vorrichtung nach Fig. 3 ist ausweislich des ersten Verfahrensschritts zunächst die Klemme K₁ angezogen während alle anderen Klemmen K_{2,...,6} gelöst sind. Eine gelöste Klemme ist in der Tabelle mit "0" bezeichnet, während eine angezogene Klemme mit "X" symbolisiert ist. Im zweiten Verfahrensschritt erfolgt das Erzeugen der Verstärkungsstrangschlaufe ("Schlaufenbildung") durch das Betätigen des Schiebers, wie anhand der Fig. 4, 5 erläutert. Im dritten Verfahrensschritt werden zur Vorbereitung des Abtrennvorgangs zusätzlich die Klemmen K_{2,3} angezogen. Im vierten Verfahrensschritt erfolgt das Abtrennen des Verstärkungsstrangs zum Erzeugen der fertigen Verstärkungsstrangschlaufe für das Vielnadelsystem mit Hilfe mindestens einer der zugehörigen Trenneinrichtungen T_{1,2}. Im fünften Verfahrensschritt werden die Klemmen K_{1,2} wieder gelöst, während die Klemme K₃ angezogen bleibt, um das Abziehen des Verstärkungsstrangs von der Zuführeinrichtung infolge der dann erfolgenden Rotation des Profilkörpers zu erlauben. Im sechsten Verfahrensschritt erfolgt im Fall des dreiseitigen Profilkörpers eine Rotation um einen Winkelschritt von 120° ("Drehung 120°"), wobei zugleich der Verstärkungsstrang weiter von der Zuführeinrichtung abgezogen wird ("Abziehen V-Strang"). Nach dem Abschluss des sechsten Verfahrensschritts verläuft eine weitere Seitenfläche des Profilkörpers wiederum parallel zur xz-Ebene des Koordinatensystems.

Im siebten Verfahrensschritt bleibt die Klemme K₃ noch angezogen, so dass im achten Verfahrensschritt erneut eine Schlaufenbildung erfolgen kann. Die Verfahrensschritte 9 bis 12 korrespondieren mit den Verfahrensschritten 3 bis 6, wobei jedoch die Klemmen K_{3,...,5} und mindestens eine der zugehörigen Trenneinrichtungen T_{2,3} angesteuert werden. Entsprechend verhält es sich mit den Verfahrensschritten 13 bis 18, in denen die Klemmen K₅, K₆, K₁ sowie mindestens eine der zugehörigen Trenneinrichtungen T_{1,3} beteiligt sind. Mit dem Abschluss des 18. Verfahrensschrittes befindet sich die Vorrichtung wiederum in der Stellung von Fig. 3 und ein erneuter Durchlauf des Verfahrens kann nach Maßgabe der Tabelle beginnend mit dem 1. Verfahrensschritt erfolgen. Allgemein gilt bei einem geraden prismatischen Profilkörper mit beispielsweise n=3 (drei) Seitenflächen 44, 46, 48 (vgl. insb. Fig. 2, 3), dass die Klemmen K_{2*i-1}, _{2*i}, die Trenneinrichtungen Tᵢ sowie ggfls. eine weitere Klemme K_{2*i+1} zur Fixierung eines neuen Verstärkungsstranganfangs mit i=1,2,3 im Zuge der Verfahrensschritte zyklisch nacheinander angesteuert werden, wobei der Index nicht größer als 6 werden darf. In den Verfahrensschritten 1. bis 6., 7. bis 12. und 13. bis 18. verläuft hierbei jeweils eine der Seitenflächen 44, 46, 48 parallel zur xz-Ebene des Koordinatensystems.

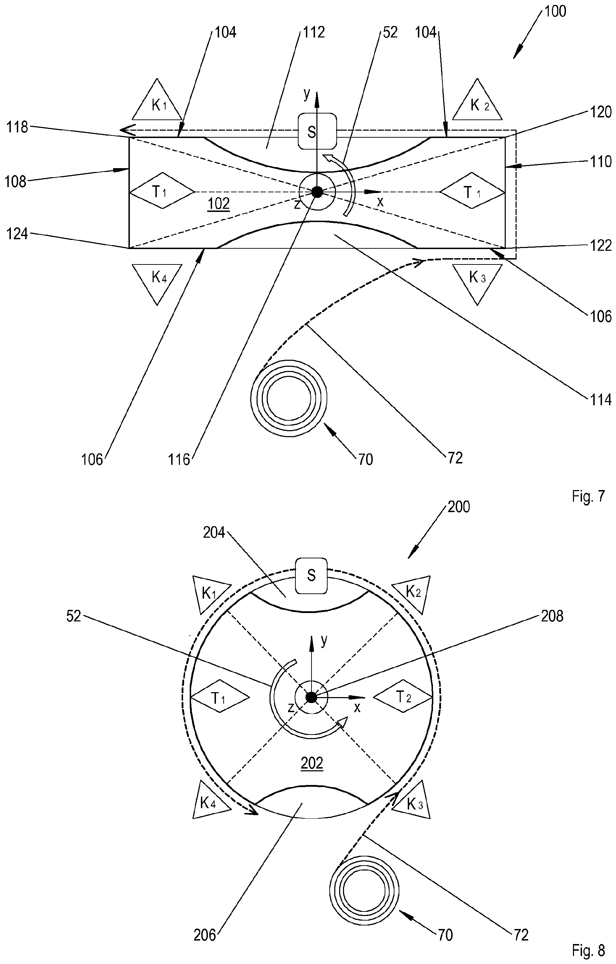

Die Fig. 7 zeigt eine stark schematisierte Draufsicht auf eine zweite Ausführungsform der Vorrichtung. Die Vorrichtung 100 umfasst unter anderem einen quaderförmigen Profilkörper 102 mit einer rechteckförmigen Querschnittsgeometrie. Der Profilkörper 102 verfügt über zwei parallel beabstandet zueinander verlaufende Längsseiten 104, 106 und zwei parallel beabstandet zueinander verlaufende Schmalseiten 108, 110, die an vier Längskanten 118, 120, 122, 124 aneinander grenzen. In den beiden Längsseiten 104, 106 sind mittig zwei durchgehende Vertiefungen 112, 114 für den längsverschieblichen Schieber S vorgesehen. Beidseits der konkav-gekrümmten Vertiefungen 112, 114 sind jeweils die Klemmen K_{1,2} sowie K_{3,4} umfangsseitig am Profilkörper 102 angeordnet. Weiterhin sind in den Profilkörper 102 zwei Trenneinrichtungen T_{1,2} zum Abtrennen des Verstärkungsstrangs nach der Schlaufenbildung integriert. Die Trenneinrichtungen T_{1,2} sind jeweils mittig zwischen den Längskanten 118, 124 und 120, 122 und auf Höhe (z-Achse) des Verstärkungsstrangs 72 innerhalb des Profilkörpers 102 positioniert, so dass die Trenneinrichtungen T_{1,2} den Verstärkungsstrang durchtrennen können. Der Verstärkungsstrang 72 wird mittels der Zuführeinrichtung 70 an den Profilkörper 102 herangeführt bzw. von diesem bei einer Rotation des Profilkörpers 102 in Richtung des Drehpfeils 52 weiter von der Zuführeinrichtung 70 abgezogen.

Die Erzeugung einer Verstärkungsstrangschlaufe erfolgt analog zu der im Rahmen der Erläuterung der Fig. 1 bis 6 beschriebenen Vorgehensweise, wobei der Profilkörper 102 abweichend hiervon jeweils in Winkelschritten von 180° um die z-Achse des Koordinatensystems bzw. seine Längsmittelachse 116 - wie mit dem Drehpfeil 52 angedeutet - verdreht wird und die Klemmen K_{1,...,4} sowie mindestens eine der beiden zugehörigen Trenneinrichtungen T_{1,2} entsprechend angesteuert werden.

Die Fig. 8 zeigt eine schematische Draufsicht auf eine dritte Ausführungsform der Vorrichtung. Eine Vorrichtung 200 umfasst unter anderem einen näherungsweise zylindrischen Profilkörper 202, in dem diametral gegenüberliegend zwei Vertiefungen 204, 206 angeordnet sind, sodass sich eine angenähert kreisförmige Querschnittsgeometrie des Profilkörpers 202 ergibt. Bevorzugt beidseits der beiden, konkav-gekrümmten Vertiefungen 204, 206 sind jeweils zwei Klemmen K_{1,2} sowie K_{2,3} umfangsseitig an dem Profilkörper 202 positioniert. Umfangsseitig mittig zwischen den Klemmen K₁, K₄ sowie K₂, K₃ ist jeweils eine Trenneinrichtung T₁, T₂ positioniert. Die Trenneinrichtung T₁ ist ausgehend von der Vertiefung 204 um 90° in Richtung des Drehpfeils 52 versetzt in dem Profilkörper 202 angeordnet, während die Trenneinrichtung T₂ diametral zu der Trenneinrichtung T₂ am Profilkörper 202 angeordnet ist. Der Verstärkungsstrang 72 wird der Vorrichtung 200 wiederum mittels der Zuführeinrichtung 70 zugeführt. Die Erzeugung einer Verstärkungsstrangschlaufe erfolgt analog zu der im Rahmen der Erläuterung der Fig. 1 bis 6 beschriebenen Vorgehensweise, wobei der zylindrische Profilkörper 202 entsprechend der zweiten Ausführungsform mit einem quaderförmigen Profilkörper jeweils in Winkelschritten von jeweils 180° um die z-Achse des Koordinatensystems bzw. seine Längsmittelachse 208 - wie mit dem Drehpfeil 52 angedeutet - rotiert, wobei die Klemmen K_{1,...,4} sowie die beiden Trenneinrichtungen T_{1,...,2} entsprechend angesteuert werden.

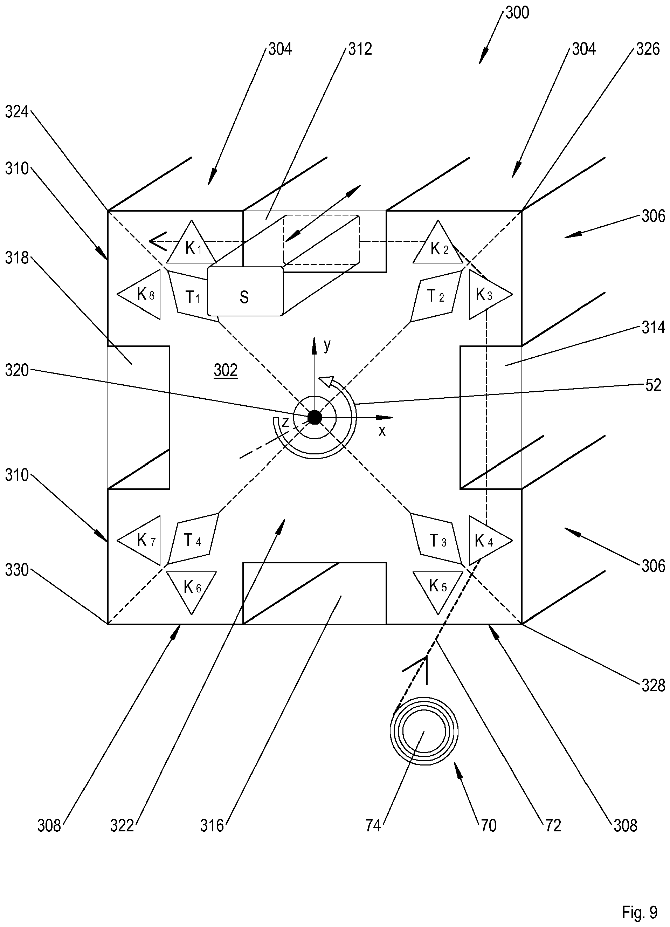

Die Fig. 9 zeigt eine perspektivische Ansicht einer vierten Ausführungsform der Vorrichtung. Eine Vorrichtung 300 umfasst einen regulären prismatischen Profilkörper 302 mit vier Seitenflächen 304, 306, 308, 310, der eine ungefähr quadratische Querschnittsgeometrie aufweist.

Mittig zu jeder Seitenfläche 304, 306, 308, 310 verläuft eine hier exemplarisch nutartige Vertiefung 312, 314, 316, 318 parallel zur z-Achse des Koordinatensystems bzw. einer Längsmittelachse 320 des Profilkörpers 302 für den Schieber S. Die Vertiefungen 312, 314, 316, 318 erstrecken sich hierbei über die gesamte Höhe des Profilkörpers 302 entlang der z-Achse. Der Schieber S ist wiederum in Richtung des schwarzen Doppelpfeils parallel zur Längsmittelachse 320 bzw. der z-Achse verschiebbar.

Abweichend von allen anderen, vorstehend erläuterten Ausführungsformen sind bei dieser vierten Ausführungsform der Vorrichtung die acht Klemmen K_{1,...,8} sowie die zugehörigen vier Trenneinrichtungen T_{1,...,4} nicht umfangsseitig, sondern im Bereich einer (vorderen) Stirnseite 322 des Profilkörpers positioniert. Hierbei sind bevorzugt jeweils zwei Klemmen K₁,₂, K_{3,4}, K_{5,6} sowie K_{7,8} jeweils beidseitig symmetrisch zu jeder der insgesamt vier Vertiefungen 312 bis 318 positioniert. Darüber hinaus sind bei dieser vierten Ausführungsform insgesamt vier Trenneinrichtungen T_{1,...,4} zwischen jeweils zwei benachbarten Klemmen K_{8,1}, K_{2,3}, K_{4,5}, K_{6,7} bzw. im Bereich von vier äußeren Ecken 324, 326, 328, 330 der Stirnseite 322 des Profilkörpers 302 positioniert. Entsprechend liegen die Klemmen K_{8,1}, K_{2,3}, K_{4,5}, K_{6,7} umfangsseitig jeweils beidseitig symmetrisch zu einer der Ecken 324, 326, 328, 330.

Der Vorteil dieser vierten Ausführungsform der erfindungsgemäßen Vorrichtung liegt insbesondere darin, dass sich eine Ansteuerung der Klemmen K_{1,...,8} sowie der Trenneinrichtungen T_{1,...,4} durch Exzenterwellen konstruktiv leichter umsetzen lässt. Im Fall dieser Ausführungsform sind die Klemmen K_{8,1}, K_{2,3}, K_{4,5}, K_{6,7} radial nach außen hin offen, so dass sich der weitere Vorteil ergibt, dass sich der Verstärkungsstrang 72 bei der Rotation des Profilkörpers 102 selbsttätigt einfädelt.

Die Erzeugung einer Verstärkungsstrangschlaufe erfolgt wiederum analog zu der im Rahmen der Fig. 1 bis 6 beschriebenen Vorgehensweise, wobei der Profilkörper 302 abweichend hiervon jeweils in Winkelschritten von jeweils 90° um die z-Achse des Koordinatensystems bzw. seine Längsmittelachse 320 - wie mit dem Drehpfeil 52 angedeutet - rotiert und die Klemmen K_{1,...,8} sowie die Trenneinrichtungen T_{1,...,4} entsprechend angesteuert werden.

Im Fall einer weiteren - in der Zeichnung nicht dargestellten Ausführungsfom der Vorrichtung - kann der Schieber S den feststehenden Profilkörper 302 beispielsweise in vier Winkelschritten von jeweils 90° umlaufen, bis dieser zur Schlaufenbildung jeweils vor einer der vier Vertiefungen 312, 314, 316, 318 des Profilkörpers 302 positioniert ist. Nach einem vollen Umlauf des Schiebers S rotiert entweder der Profilkörper 302 um eine volle Umdrehung um seine Längsmittelachse 320 oder die Zuführeinrichtung 70 umläuft einmal den stationären Profilkörper 302, wobei zugleich der Verstärkungsstrang 72 weiter von der Vorratsspule 74 abgezogen und auf dem Profilkörper 302 abgelegt wird. Weiterhin kann jeder Vertiefung 312, 314, 316, 318 ein unabhängig ansteuerbarer Schieber S zugeordnet sein. Darüber hinaus kann die Zuführeinrichtung einen stationären Profilkörper mit einem in Bezug zu dessen Vertiefung umfangsseitig fest ausgerichteten Schieber S zum Nachführen des Verstärkungsstrangs umlaufen. Darüber hinaus kann auch der Profilkörper parallel zu seiner Längsmittelachse eine Relativbewegung zu dem Schieber ausführen.

Im Ergebnis lassen sich mittels der erfindungsgemäßen Vorrichtung Verstärkungsstrangschlaufen mit kurzen Taktzeiten sowie hoher Maßhaltigkeit bei guter Reproduzierbarkeit erzeugen und einem nachgeschalteten Vielnadelsystem zur Armierung von Bauteilen aus Schaumkunststoff vorlegen.

Die Offenbarung betrifft eine Vorrichtung 40, 100, 200, 300 zum Bereitstellen von Verstärkungsstrangschlaufen 14, 80 für ein Vielnadelsystem 12 zur mechanischen Armierung eines Bauteils 10 aus einem Schaumkunststoff umfassend die folgenden Merkmale:
a. einen Profilkörper 42, 102, 202, 302,
b. mindestens zwei umfangsseitig und/oder stirnseitig am Profilkörper 42, 102, 202, 302 positionierte Klemmen K_{1,...,8} zum Fixieren eines Verstärkungsstrangs 72 am Profilkörper 42, 102, 202, 302,
c. mindestens einen parallel zu einer Längsmittelachse 50, 116, 208, 320 des Profilkörpers 42, 102, 202, 302 verschiebbaren Schieber S zum Erzeugen einer Verstärkungsstrangschlaufe 14, 80,
d. mindestens zwei umfangsseitig und/oder stirnseitig im Profilkörper 42, 102, 202, 302 positionierte Trenneinrichtungen T_{1,...,4} zum Abtrennen der Verstärkungsstrangschlaufe 14, 80 vom Verstärkungsstrang 72, und
e. eine Zuführeinrichtung 70 zum Zuführen der Verstärkungsstrangschlaufe 14, 80.
Hierdurch lassen sich Verstärkungsstrangschlaufen mit hoher Genauigkeit erzeugen und individuell den Nadel und/oder Greifer eines Vielnadelsystems 12 vorlegen. Darüber hinaus lässt sich die Vorrichtung platzsparende in ein solches Vielnadelsystem 12 integrieren. Darüber hinaus betrifft die Offenbarung ein Verfahren.

**Bezugszeichenliste**

| | | | |
|---|---|---|---|
| 10. | Bauteil | 100. | Vorrichtung (2. Var.) |
| 12. | Vielnadelsystem | 102. | Profilkörper |
| 14. | Verstärkungsstrangschlaufe | 104. | Längsseite |
| 16. | Nadel | 106. | Längsseite |
| 18. | schwarzer Pfeil | 108. | Schmalseite |
| 20. | Oberseite (Bauteil) | 110. | Schmalseite |
| 22. | Unterseite (Bauteil) | 112. | Vertiefung |
| 40. | Vorrichtung (1. Var.) | 114. | Vertiefung |
| 42. | Profilkörper | 116. | Längsmittelachse |
| 44. | Seitenfläche | 118. | Längskante |
| 46. | Seitenfläche | 120. | Längskante |
| 48. | Seitenfläche | 122. | Längskante |
| 50. | Längsmittelachse | 124. | Längskante |
| 52. | Drehpfeil | 200. | Vorrichtung (3. Var.) |
| 54. | Vertiefung | 202. | Profilkörper |
| 56. | Vertiefung | 204. | Vertiefung |
| 58. | Vertiefung | 206. | Vertiefung |
| 60. | Längskante | 208. | Längsmittelachse |
| 62. | Längskante | | |
| 64. | Längskante | | |
| 66. | Stirnseite (Profilkörper) | | |
| 70. | Zuführeinrichtung | | |
| 72. | Verstärkungsstrang | | |
| 74. | Vorratsspule | | |
| 80. | Verstärkungsstrangschlaufe | | |
| 82. | erster Schenkel | | |
| 84. | zweiter Schenkel | | |
| 86. | Basisabschnitt | | |
| 88. | Abschnitt (V-strang) | | |
| | | | |
| 300. | Vorrichtung (4. Var.) | | |
| 302. | Profilkörper | | |
| 304. | Seitenfläche | | |
| 306. | Seitenfläche | | |
| 308. | Seitenfläche | | |
| 310. | Seitenfläche | | |
| 312. | Vertiefung | | |
| 314. | Vertiefung | | |
| 316. | Vertiefung | | |
| 318. | Vertiefung | | |
| 320. | Längsmittelachse | | |
| 322. | Stirnseite (Profilkörper) | | |
| 324. | Ecke | | |
| 326. | Ecke | | |
| 328. | Ecke | | |
| 330. | Ecke | | |
| | | | |
| B | Breite (Seitenfläche, PK) | | |
| H | Höhe (Profilkörper) | | |
| K_{1,..., 8} | Klemme | | |
| S | Schieber | | |
| T_{1,..., 4} | Trenneinrichtung | | |
| W | Weg (Schieber) | | |

## Patentansprüche

1. Vorrichtung (40, 100, 200, 300) zum Bereitstellen von Verstärkungsstrangschlaufen (14, 80) für ein Vielnadelsystem (12) zur mechanischen Armierung eines Bauteils (10) aus einem Schaumkunststoff, umfassend die folgenden Merkmale:
einen Profilkörper (42, 102, 202, 302),
mindestens zwei umfangsseitig und/oder stirnseitig am Profilkörper (42, 102, 202, 302) positionierte Klemmen (K_{1,...,8}) zum Fixieren eines Verstärkungsstrangs (72) am Profilkörper (42, 102, 202, 302),
mindestens einen parallel zu einer Längsmittelachse (50, 116, 208, 320) des Profilkörpers (42, 102, 202, 302) verschiebbaren Schieber (S) zum Erzeugen einer Verstärkungsstrangschlaufe (14, 80),
wobei die Längsmittelachse senkrecht zum Querschnitt des Profilkörpers steht, mindestens zwei umfangsseitig und/oder stirnseitig im Profilkörper (42, 102, 202, 302) positionierte Trenneinrichtungen (T_{1,...,4}) zum Abtrennen der Verstärkungsstrangschlaufe (14, 80) vom Verstärkungsstrang (72), und
eine Zuführeinrichtung (70) zum Zuführen des Verstärkungsstrangs (72);
wobei
der Profilkörper (42) eine näherungsweise gerade prismatische Form mit mindestens drei Seitenflächen (44, 46, 48) aufweist, jede der mindestens drei Seitenflächen (44, 46, 48) eine mittig zu dieser und parallel zur Längsmittelachse (50) verlaufende Vertiefung (54, 56, 58) zur zumindest teilweisen Aufnahme des Schiebers (S) aufweist,
jeweils zwei Klemmen (K_{1,...,6}) beidseits jeder Vertiefung (54, 56, 58) an dem Profilkörper (42) positioniert sind, und mindestens eine Trenneinrichtung (T_{1,...,3}) im Bereich jeder der mindestens drei Längskanten (60, 62, 64) des Profilkörpers integriert ist.

2. Vorrichtung (40, 100, 200, 300) zum Bereitstellen von Verstärkungsstrangschlaufen (14, 80) für ein Vielnadelsystem (12) zur mechanischen Armierung eines Bauteils (10) aus einem Schaumkunststoff, umfassend die folgenden Merkmale:
einen Profilkörper (42, 102, 202, 302),
mindestens zwei umfangsseitig und/oder stirnseitig am Profilkörper (42, 102, 202, 302) positionierte Klemmen (K_{1,...,8}) zum Fixieren eines Verstärkungsstrangs (72) am Profilkörper (42, 102, 202, 302),
mindestens einen parallel zu einer Längsmittelachse (50, 116, 208, 320) des Profilkörpers (42, 102, 202, 302) verschiebbaren Schieber (S) zum Erzeugen einer Verstärkungsstrangschlaufe (14, 80),
wobei die Längsmittelachse senkrecht zum Querschnitt des Profilkörpers steht, mindestens zwei umfangsseitig und/oder stirnseitig im Profilkörper (42, 102, 202, 302) positionierte Trenneinrichtungen (T_{1,...,4}) zum Abtrennen der Verstärkungsstrangschlaufe (14, 80) vom Verstärkungsstrang (72), und
eine Zuführeinrichtung (70) zum Zuführen des Verstärkungsstrangs (72);
wobei
der Profilkörper (102) eine näherungsweise quaderförmige Form aufweist,
jede von zwei Längsseiten (104, 106) des Profilkörpers (102) eine mittig zu dieser und parallel zur Längsmittelachse (116) verlaufende Vertiefung (112, 114) zur zumindest teilweisen Aufnahme des Schiebers (S) aufweist,
jeweils zwei Klemmen (K_{1,...,4}) im Bereich jeder Längsseite (104, 106) beidseits zu jeder Vertiefung (112, 114) an dem Profilkörper (102) positioniert sind, und
jeweils mindestens eine Trenneinrichtung (T₁,₂) in jeder Schmalseite (108, 110) des Profilkörpers 102 integriert ist.

3. Vorrichtung (40, 100, 200, 300) zum Bereitstellen von Verstärkungsstrangschlaufen (14, 80) für ein Vielnadelsystem (12) zur mechanischen Armierung eines Bauteils (10) aus einem Schaumkunststoff, umfassend die folgenden Merkmale:
einen Profilkörper (42, 102, 202, 302),
mindestens zwei umfangsseitig und/oder stirnseitig am Profilkörper (42, 102, 202, 302) positionierte Klemmen (K_{1,...,8}) zum Fixieren eines Verstärkungsstrangs (72) am Profilkörper (42, 102, 202, 302),
mindestens einen parallel zu einer Längsmittelachse (50, 116, 208, 320) des Profilkörpers (42, 102, 202, 302) verschiebbaren Schieber (S) zum Erzeugen einer Verstärkungsstrangschlaufe (14, 80),
wobei die Längsmittelachse senkrecht zum Querschnitt des Profilkörpers steht, mindestens zwei umfangsseitig und/oder stirnseitig im Profilkörper (42, 102, 202, 302) positionierte Trenneinrichtungen (T_{1,...,4}) zum Abtrennen der Verstärkungsstrangschlaufe (14, 80) vom Verstärkungsstrang (72), und
eine Zuführeinrichtung (70) zum Zuführen des Verstärkungsstrangs (72);
wobei
der Profilkörper (202) eine näherungsweise zylindrische Form aufweist,
der Profilkörper (202) zwei diametral angeordnete sowie parallel zur Längsmittelachse (208) verlaufende Vertiefungen (204, 206) zur zumindest teilweisen Aufnahme des Schiebers (S) aufweist,
zwei Klemmen (K_{1,...,4}) jeweils beidseits an jeder der Vertiefungen (204, 206) an dem Profilkörper (202) positioniert sind, und eine Trenneinrichtung (T_{1,2}) jeweils zwischen zwei benachbarten Klemmen (K_{1,...,4}) in den Profilkörper (202) integriert ist.

4. Vorrichtung (40, 100, 200, 300) zum Bereitstellen von Verstärkungsstrangschlaufen (14, 80) für ein Vielnadelsystem (12) zur mechanischen Armierung eines Bauteils (10) aus einem Schaumkunststoff, umfassend die folgenden Merkmale:
einen Profilkörper (42, 102, 202, 302),
mindestens zwei umfangsseitig und/oder stirnseitig am Profilkörper (42, 102, 202, 302) positionierte Klemmen (K_{1,...,8}) zum Fixieren eines Verstärkungsstrangs (72) am Profilkörper (42, 102, 202, 302),
mindestens einen parallel zu einer Längsmittelachse (50, 116, 208, 320) des Profilkörpers (42, 102, 202, 302) verschiebbaren Schieber (S) zum Erzeugen einer Verstärkungsstrangschlaufe (14, 80),
wobei die Längsmittelachse senkrecht zum Querschnitt des Profilkörpers steht, mindestens zwei umfangsseitig und/oder stirnseitig im Profilkörper (42, 102, 202, 302) positionierte Trenneinrichtungen (T_{1,...,4}) zum Abtrennen der Verstärkungsstrangschlaufe (14, 80) vom Verstärkungsstrang (72), und
eine Zuführeinrichtung (70) zum Zuführen des Verstärkungsstrangs (72);
wobei
der Profilkörper (302) eine näherungsweise gerade prismatische Form mit mindestens drei Seitenflächen (304, 306, 308, 310) aufweist,
jede der mindestens drei Seitenflächen (304, 306, 308, 310) eine mittig zu dieser und parallel zur Längsmittelachse verlaufende Vertiefung (312, 314, 316, 318) zur zumindest teilweisen Aufnahme des Schiebers (S) aufweist,
jeweils zwei Klemmen (K_{1,...,4}) beidseits zu jeder Vertiefung (312, 314, 316, 318) an einer Stirnseite (322) des Profilkörpers (302) positioniert sind, und
mindestens eine Trenneinrichtung (T_{1,...4}) im Bereich jeder der mindestens drei Ecken (324, 326, 328, 330) der Stirnseite (322) des Profilkörpers (302) integriert ist.

5. Vorrichtung (40, 100, 200, 300) nach einem der Ansprüche 1 bis 4, **dadurch gekennzeichnet, dass** der Profilkörper (42, 102, 202, 302) um die Längsmittelachse (50, 116, 208, 320) drehbar ist.

6. Vorrichtung (40, 100, 200, 300) nach einem der Ansprüche 1 bis 5, **dadurch gekennzeichnet, dass** der Profilkörper (42, 102, 202, 302) in Winkelschritten von 360°/n um seine Längsmittelachse (50, 116, 208, 320) verdrehbar ist, wobei n eine natürliche Zahl ist, die gleich oder größer Zwei ist.

7. Vorrichtung (40, 100, 200, 300) nach einem der Ansprüche 1 bis 6, **dadurch gekennzeichnet, dass** die Trenneinrichtungen (T_{1,...,8}) in einer Ruhestellung bündig mit dem Profilkörper (42, 102, 202, 302) abschließen und in einer Arbeitsstellung zumindest teilweise aus dem Profilkörper (42, 102, 202, 302) herausragen.

8. Vorrichtung (40, 100, 200, 300) nach einem der Ansprüche 1 bis 7, **dadurch gekennzeichnet, dass** der Zuführeinrichtung (70) eine Spanneinheit, insbesondere zur Vergleichmäßigung der mechanischen Spannung des Verstärkungsstrangs (72), zugeordnet ist.

9. Vorrichtung (40, 100, 200, 300) nach einem der Ansprüche 1 bis 8, **dadurch gekennzeichnet, dass** die Klemmen (K_{1,...,8}) mittels eines Exzenters betätigbar sind.

10. Vorrichtung (40, 100, 200, 300) nach einem der Ansprüche 1 bis 9, **dadurch gekennzeichnet, dass** mindestens eine weitere Klemme (K_{1,...,8}) umfangsseitig am Profilkörper (42, 102, 202, 302) angeordnet ist.

11. Verfahren zum Bereitstellen von Verstärkungsstrangschlaufen (14, 80) für ein Vielnadelsystem (12) zur mechanischen Armierung eines Bauteils (10) aus einem Schaumkunststoff mittels einer Vorrichtung nach einem der Ansprüche 1 bis 10, wobei das Verfahren die folgenden Schritte aufweist:
Fixieren eines ersten Schenkels (82) der auszubildenden Verstärkungsstrangschlaufe (80) mittels einer ersten Klemme (K_{1,...,8}) an dem Profilkörper (42, 102, 202, 302),
Verfahren des Schiebers (S) parallel zur Längsmittelachse (50, 116, 208, 320) des Profilkörpers (42, 102, 202, 302) zum Erzeugen der Verstärkungsstrangschlaufe (80),
Fixieren eines zweiten Schenkels (84) der Verstärkungsstrangschlaufe am Profilkörper (42, 102, 202, 302) mit Hilfe einer weiteren von der ersten Klemme (K_{1,...,8}) umfangsseitig beabstandet am Profilkörper positionierten Klemme (K_{1,...,8}),
Abtrennen des zwischen den Klemmen (K_{1,...,8}) eingespannten Verstärkungsstrangs (72) zum Erzeugen der Verstärkungsstrangschlaufe (80) mittels mindestens einer Trenneinrichtung (T_{1,...,4}) derart, dass eine Nadel und/oder ein Greifer des Vielnadelsystems (12) die Verstärkungsstrangschlaufe (80) aufnehmen kann, Nachführen des Verstärkungsstrangs (72),
Wiederholen der Schritte a) bis e).

12. Verfahren nach Anspruch 11, **dadurch gekennzeichnet, dass** der Profilkörper (42, 102, 202, 302) zum Nachführen des Verstärkungsstrangs (72) im Verfahrensschritt e) um einen Winkelschritt von 360° geteilt durch n unter gleichzeitigem Abziehen des Verstärkungsstrangs (14, 80) von einer Zuführeinrichtung (70) verdreht wird, wobei n eine natürliche Zahl ist, die gleich oder größer als 2 ist.

13. Verfahren nach Anspruch 11 oder 12, **dadurch gekennzeichnet, dass** der Verstärkungsstrang (14, 80) im Verfahrensschritt d) vor dem Abtrennen mittels mindestens einer weiteren Klemme (K_{1,...,8}) am Profilkörper (42, 102, 202, 302) fixiert wird.

14. Verfahren nach einem der Ansprüche 11 bis 13, **dadurch gekennzeichnet, dass** ein axialer Weg (W) des Schiebers (S) ausgehend von seiner Ruhestellung bis zum Erreichen der Arbeitsstellung so eingestellt wird, dass eine Verstärkungsstrangschlaufe (80) mit einer vorgegebenen Länge erzeugt wird.

## Claims

1. Apparatus (40, 100, 200, 300) for providing reinforcing strand loops (14, 80) for a multi-needle system (12) for mechanically reinforcing a component (10) consisting of a foamed plastic, comprising the following features:
a profile body (42, 102, 202, 302),
at least two clamps (K_{1,...,8}) positioned circumferentially and/or at the end sides on the profile body (42, 102, 202, 302) and intended for fixing a reinforcing strand (72) to the profile body (42, 102, 202, 302),
at least one slide (S) which is displaceable parallel to a longitudinal centre axis (50, 116, 208, 320) of the profile body (42, 102, 202, 302) and intended for producing a reinforcing strand loop (14, 80),
wherein the longitudinal centre axis is perpendicular to the cross section of the profile body,
at least two separating devices (T_{1,...,4}) positioned circumferentially and/or at the end sides in the profile body (42, 102, 202, 302) and intended for severing the reinforcing strand loop (14, 80) from the reinforcing strand (72), and
a feed device (70) for feeding the reinforcing strand (72);
wherein
the profile body (42) has an approximately rectilinear prismatic shape with at least three lateral surfaces (44, 46, 48),
each of the at least three lateral surfaces (44, 46, 48) has a depression (54, 56, 58) extending centrally thereto and parallel to the longitudinal centre axis (50) and intended for at least partially receiving the slide (S),
in each case two clamps (K_{1,...,6}) are positioned on both sides of each depression (54, 56, 58) on the profile body (42), and
at least one separating device (T_{1,...,3}) is integrated in the region of each of the at least three longitudinal edges (60, 62, 64) of the profile body.

2. Apparatus (40, 100, 200, 300) for providing reinforcing strand loops (14, 80) for a multi-needle system (12) for mechanically reinforcing a component (10) consisting of a foamed plastic, comprising the following features:
a profile body (40, 102, 202, 302),
at least two clamps (K_{1,...,8}) positioned circumferentially and/or at the end sides on the profile body (42, 102, 202, 302) and intended for fixing a reinforcing strand (72) to the profile body (42, 102, 202, 302),
at least one slide (S) which is displaceable parallel to a longitudinal centre axis (50, 116, 208, 320) of the profile body (42, 102, 202, 302) and intended for producing a reinforcing strand loop (14, 80),
wherein the longitudinal centre axis is perpendicular to the cross section of the profile body,
at least two separating devices (T_{1,...,4}) positioned circumferentially and/or at the end sides in the profile body (42, 102, 202, 302) and intended for severing the reinforcing strand loop (14, 80) from the reinforcing strand (72), and
a feed device (70) for feeding the reinforcing strand (72);
wherein
the profile body (102) has an approximately parallelepipedal shape,
each of two longitudinal sides (104, 106) of the profile body (102) has a depression (112, 114) extending centrally thereto and parallel to the longitudinal centre axis (116) and intended for at least partially receiving the slide (S),
in each case two clamps (K_{1,...,4}) are positioned in the region of each longitudinal side (104, 106) on both sides of each depression (112, 114) on the profile body (102), and
in each case at least one separating device (T_{1,2}) is integrated in each narrow side (108, 110) of the profile body 102.

3. Apparatus (40, 100, 200, 300) for providing reinforcing strand loops (14, 80) for a multi-needle system (12) for mechanically reinforcing a component (10) consisting of a foamed plastic, comprising the following features:
a profile body (42, 102, 202, 302),
at least two clamps (K_{1,...,8}) positioned circumferentially and/or at the end sides on the profile body (42, 102, 202, 302) and intended for fixing a reinforcing strand (72) to the profile body (42, 102, 202, 302),
at least one slide (S) which is displaceable parallel to a longitudinal centre axis (50, 116, 208, 320) of the profile body (42, 102, 202, 302) and intended for producing a reinforcing strand loop (14, 80),
wherein the longitudinal centre axis is perpendicular to the cross section of the profile body,
at least two separating devices (T_{1,...,4}) positioned circumferentially and/or at the end sides in the profile body (42, 102, 202, 302) and intended for severing the reinforcing strand loop (14, 80) from the reinforcing strand (72), and
a feed device (70) for feeding the reinforcing strand (72);
wherein
the profile body (202) has an approximately cylindrical shape,
the profile body (202) has two diametrically arranged depressions (204, 206) extending parallel to the longitudinal centre axis (208) and intended for at least partially receiving the slide (S),
two clamps (K_{1,...,4}) are each positioned on both sides of each of the depressions (204, 206) on the profile body (202), and
a separating device (T_{1,2}) is in each case integrated between two adjacent clamps (K_{1,...,4}) into the profile body (202).

4. Apparatus (40, 100, 200, 300) for providing reinforcing strand loops (14, 80) for a multi-needle system (12) for mechanically reinforcing a component (10) consisting of a foamed plastic, comprising the following features:
a profile body (42, 102, 202, 302),
at least two clamps (K_{1,...,8}) positioned circumferentially and/or at the end sides on the profile body (42, 102, 202, 302) and intended for fixing a reinforcing strand (72) to the profile body (42, 102, 202, 302),
at least one slide (S) which is displaceable parallel to a longitudinal centre axis (50, 116, 208, 320) of the profile body (42, 102, 202, 302) and intended for producing a reinforcing strand loop (14, 80),
wherein the longitudinal centre axis is perpendicular to the cross section of the profile body,
at least two separating devices (T_{1,...,4}) positioned circumferentially and/or at the end sides in the profile body (42, 102, 202, 302) and intended for severing the reinforcing strand loop (14, 80) from the reinforcing strand (72), and
a feed device (70) for feeding the reinforcing strand (72);
wherein
the profile body (302) has an approximately rectilinear prismatic shape with at least three lateral surfaces (304, 306, 308, 310),
each of the at least three lateral surfaces (304, 306, 308, 310) has a depression (312, 314, 316, 318) extending centrally thereto and parallel to the longitudinal centre axis and intended for at least partially receiving the slide (S),
in each case two clamps (K_{1,...,4}) are positioned on both sides of each depression (312, 314, 316, 318) on an end side (322) of the profile body (302), and
at least one separating device (T_{1,...,4}) is integrated in the region of each of the at least three corners (324, 326, 328, 330) of the end side (322) of the profile body (302).

5. Apparatus (40, 100, 200, 300) according to one of Claims 1 to 4, **characterized in that** the profile body (42, 102, 202, 302) is rotatable about the longitudinal centre axis (50, 116, 208, 320).

6. Apparatus (40, 100, 200, 300) according to one of Claims 1 to 5, **characterized in that** the profile body (42, 102, 202, 302) is rotatable in angle steps of 360°/n about its longitudinal centre axis (50, 116, 208, 320), where n is a natural number which is greater than or equal to 2.

7. Apparatus (40, 100, 200, 300) according to one of Claims 1 to 6, **characterized in that**, in an inoperative position, the separating devices (T_{1,...8}) terminate flush with the profile body (42, 102, 202, 302) and, in an operative position, project at least partially from the profile body (42, 102, 202, 302).

8. Apparatus (40, 100, 200, 300) according to one of Claims 1 to 7, **characterized in that** the feed device (70) is assigned a tensioning unit, in particular for evening out the mechanical tension of the reinforcing strand (72).

9. Apparatus (40, 100, 200, 300) according to one of Claims 1 to 8, **characterized in that** the clamps (K_{1,...8}) can be actuated by means of an eccentric.

10. Apparatus (40, 100, 200, 300) according to one of Claims 1 to 9, **characterized in that** at least one further clamp (K_{1,...8}) is arranged circumferentially on the profile body (42, 102, 202, 302).

11. Method for providing reinforcing strand loops (14, 80) for a multi-needle system (12) for mechanically reinforcing a component (10) consisting of a foamed plastic by means of an apparatus according to one of Claims 1 to 10, wherein the method comprises the following steps:
fixing a first leg (82) of the reinforcing strand loop (80) to be formed by means of a first clamp (K_{1,...8}) to the profile body (42, 102, 202, 302),
moving the slide (S) parallel to the longitudinal centre axis (50, 116, 208, 320) of the profile body (42, 102, 202, 302) to produce the reinforcing strand loop (80),
fixing a second leg (84) of the reinforcing strand loop to the profile body (42, 102, 202, 302) with the aid of a further clamp (K_{1,...8}) positioned on the profile body at a circumferential spacing from the first clamp (K_{1,...8}),
severing the reinforcing strand (72) clamped between the clamps (K_{1,...8}) to produce the reinforcing strand loop (80) by means of at least one separating device (T_{1,...4}) in such a way that a needle and/or a gripper of the multi-needle system (12) can receive the reinforcing strand loop (80), advancing the reinforcing strand (72),
repeating steps a) to e).

12. Method according to Claim 11, **characterized in that**, for advancing the reinforcing strand (72) in method step e), the profile body (42, 102, 202, 302) is rotated by an angle step of 360° divided by n with the reinforcing strand (14, 80) being simultaneously drawn off from a feed device (70), where n is a natural number which is greater than or equal to 2.

13. Method according to Claim 11 or 12, **characterized in that**, in method step d), before the severing, the reinforcing strand (14, 80) is fixed by means of at least one further clamp (K_{1,...8}) to the profile body (42, 102, 202, 302).

14. Method according to one of Claims 11 to 13, **characterized in that** an axial displacement (W) of the slide (S) starting from its inoperative position up to reaching the operative position is set in such a way that a reinforcing strand loop (80) is produced with a predetermined length.

## Revendications

1. Dispositif (40, 100, 200, 300) permettant de fournir des boucles de fil de renforcement (14, 80) pour un système multi-aiguilles (12) pour l'armature mécanique d'un composant (10) constitué d'une mousse de plastique, présentant les caractéristiques suivantes :
un corps profilé (42, 102, 202, 302),
au moins deux éléments de serrage (K_{1,...,8}) positionnés du côté périphérique et/ou du côté frontal sur le corps profilé (42, 102, 202, 302) pour la fixation d'un fil de renforcement (72) sur le corps profilé (42, 102, 202, 302),
au moins un coulisseau (S) déplaçable parallèlement à un axe médian longitudinal (50, 116, 208, 320) du corps profilé (42, 102, 202, 302) pour produire une boucle de fil de renforcement (14, 80),
dans lequel l'axe médian longitudinal est perpendiculaire à la section transversale du corps profilé,
au moins deux dispositifs de séparation (T_{1,...,4}) positionnés du côté périphérique et/ou du côté frontal dans le corps profilé (42, 102, 202, 302) pour la séparation de la boucle de fil de renforcement (14, 80) du fil de renforcement (72), et
un dispositif d'amenée (70) pour l'amenée du fil de renforcement (72) ;
dans lequel
le corps profilé (42) présente une forme prismatique approximativement droite dotée d'au moins trois faces latérales (44, 46, 48),
chacune desdites au moins trois faces latérales (44, 46, 48) comprend un évidement (54, 56, 58) s'étendant centralement par rapport à celle-ci et parallèlement à l'axe médian longitudinal (50) pour recevoir au moins partiellement le coulisseau (S),
respectivement deux éléments de serrage (K_{1,...,6}) sont positionnés de part et d'autre de chaque évidement (54, 56, 58) sur le corps profilé (42), et
au moins un dispositif de séparation (T_{1,...,3}) est intégré dans la région de chacune des au moins trois arêtes longitudinales (60, 62, 64) du corps profilé.

2. Dispositif (40, 100, 200, 300) permettant de fournir des boucles de fil de renforcement (14, 80) pour un système multi-aiguilles (12) pour l'armature mécanique d'un composant (10) constitué d'une mousse de plastique, présentant les caractéristiques suivantes :
un corps profilé (42, 102, 202, 302),
au moins deux éléments de serrage (K_{1,...,8}) positionnés du côté périphérique et/ou du côté frontal sur le corps profilé (42, 102, 202, 302) pour la fixation d'un fil de renforcement (72) sur le corps profilé (42, 102, 202, 302),
au moins un coulisseau (S) déplaçable parallèlement à un axe médian longitudinal (50, 116, 208, 320) du corps profilé (42, 102, 202, 302) pour produire une boucle de fil de renforcement (14, 80),
dans lequel l'axe médian longitudinal est perpendiculaire à la section transversale du corps profilé,
au moins deux dispositifs de séparation (T_{1,...,4}) positionnés du côté périphérique et/ou du côté frontal dans le corps profilé (42, 102, 202, 302) pour la séparation de la boucle de fil de renforcement (14, 80) du fil de renforcement (72), et
un dispositif d'amenée (70) pour l'amenée du fil de renforcement (72) ;
dans lequel
le corps profilé (102) présente une forme approximativement parallélépipédique,
chacun parmi deux côtés longitudinaux (104, 106) du corps profilé (102) comprend un évidement (112, 114) s'étendant centralement par rapport à celui-ci et parallèlement à l'axe médian longitudinal (116) pour recevoir au moins partiellement le coulisseau (S),
respectivement deux éléments de serrage (K_{1,...,4}) sont positionnés de part et d'autre de chaque évidement (112, 114) sur le corps profilé (102) dans la région de chaque côté longitudinal (104, 106), et
respectivement au moins un dispositif de séparation (T_{1,2}) est intégré dans chaque petit côté (108, 110) du corps profilé (102).

3. Dispositif (40, 100, 200, 300) permettant de fournir des boucles de fil de renforcement (14, 80) pour un système multi-aiguilles (12) pour l'armature mécanique d'un composant (10) constitué d'une mousse de plastique, présentant les caractéristiques suivantes :
un corps profilé (42, 102, 202, 302),
au moins deux éléments de serrage (K_{1,...,8}) positionnés du côté périphérique et/ou du côté frontal sur le corps profilé (42, 102, 202, 302) pour la fixation d'un fil de renforcement (72) sur le corps profilé (42, 102, 202, 302),
au moins un coulisseau (S) déplaçable parallèlement à un axe médian longitudinal (50, 116, 208, 320) du corps profilé (42, 102, 202, 302) pour produire une boucle de fil de renforcement (14, 80),
dans lequel l'axe médian longitudinal est perpendiculaire à la section transversale du corps profilé,
au moins deux dispositifs de séparation (T_{1,...,4}) positionnés du côté périphérique et/ou du côté frontal dans le corps profilé (42, 102, 202, 302) pour la séparation de la boucle de fil de renforcement (14, 80) du fil de renforcement (72), et
un dispositif d'amenée (70) pour l'amenée du fil de renforcement (72) ;
dans lequel
le corps profilé (42) présente une forme approximativement cylindrique,
le corps profilé (202) comprend deux évidements (204, 206) disposés diamétralement et s'étendant parallèlement à l'axe médian longitudinal (208) pour recevoir au moins partiellement le coulisseau (S),
deux éléments de serrage (K_{1,...,4}) sont positionnés respectivement de part et d'autre au niveau de chacun des évidements (204, 206) sur le corps profilé (202), et
un dispositif de séparation (T_{1,2}) est intégré respectivement entre deux éléments de serrage (K_{1,...,4}) adjacents dans le corps profilé (202).

4. Dispositif (40, 100, 200, 300) permettant de fournir des boucles de fil de renforcement (14, 80) pour un système multi-aiguilles (12) pour l'armature mécanique d'un composant (10) constitué d'une mousse de plastique, présentant les caractéristiques suivantes :
un corps profilé (42, 102, 202, 302),
au moins deux éléments de serrage (K_{1,...,8}) positionnés du côté périphérique et/ou du côté frontal sur le corps profilé (42, 102, 202, 302) pour la fixation d'un fil de renforcement (72) sur le corps profilé (42, 102, 202, 302),
au moins un coulisseau (S) déplaçable parallèlement à un axe médian longitudinal (50, 116, 208, 320) du corps profilé (42, 102, 202, 302) pour produire une boucle de fil de renforcement (14, 80),
dans lequel l'axe médian longitudinal est perpendiculaire à la section transversale du corps profilé,
au moins deux dispositifs de séparation (T_{1,...,4}) positionnés du côté périphérique et/ou du côté frontal dans le corps profilé (42, 102, 202, 302) pour la séparation de la boucle de fil de renforcement (14, 80) du fil de renforcement (72), et
un dispositif d'amenée (70) pour l'amenée du fil de renforcement (72) ;
dans lequel
le corps profilé (302) présente une forme prismatique approximativement droite dotée d'au moins trois faces latérales (304, 306, 308, 310),
chacune desdites au moins trois faces latérales (304, 306, 308, 310) comprend un évidement (312, 314, 316, 318) s'étendant centralement par rapport à celle-ci et parallèlement à l'axe médian longitudinal pour recevoir au moins partiellement le coulisseau (S),
respectivement deux éléments de serrage (K_{1,...,4}) sont positionnés de part et d'autre de chaque évidement (312, 314, 316, 318) sur un côté frontal (322) du corps profilé (302), et
au moins un dispositif de séparation (T_{1,...,4}) est intégré dans la région de chacun des au moins trois coins (324, 326, 328, 330) du côté frontal (322) du corps profilé (302).

5. Dispositif (40, 100, 200, 300) selon l'une des revendications 1 à 4, **caractérisé en ce que** le corps profilé (42, 102, 202, 302) peut tourner autour de l'axe médian longitudinal (50, 116, 208, 320).

6. Dispositif (40, 100, 200, 300) selon l'une des revendications 1 à 5, **caractérisé en ce que** le corps profilé (42, 102, 202, 302) peut tourner suivant des pas angulaires de 360°/n autour de son axe médian longitudinal (50, 116, 208, 320), n étant un nombre naturel qui est supérieur ou égal à deux.

7. Dispositif (40, 100, 200, 300) selon l'une des revendications 1 à 6, **caractérisé en ce que** les dispositifs de séparation (T_{1,...,8}) se terminent en affleurement avec le corps profilé (42, 102, 202, 302) dans une position de repos et font saillie au moins partiellement à partir du corps profilé (42, 102, 202, 302) dans une position de travail.

8. Dispositif (40, 100, 200, 300) selon l'une des revendications 1 à 7, **caractérisé en ce qu'**une unité de tension, en particulier pour l'uniformisation de la tension mécanique du fil de renforcement (72), est associée au dispositif d'amenée (70).

9. Dispositif (40, 100, 200, 300) selon l'une des revendications 1 à 8, **caractérisé en ce que** les éléments de serrage (K_{1,...,8}) peuvent être actionnés au moyen d'un excentrique.

10. Dispositif (40, 100, 200, 300) selon l'une des revendications 1 à 9, **caractérisé en ce qu'**au moins un autre élément de serrage (K_{1,...,8}) est disposé du côté périphérique sur le corps profilé (42, 102, 202, 302).

11. Procédé permettant de fournir des boucles de fil de renforcement (14, 80) pour un système multi-aiguilles (12) pour l'armature mécanique d'un composant (10) constitué d'une mousse de plastique au moyen d'un dispositif selon l'une des revendications 1 à 10, le procédé comprenant les étapes suivantes :
la fixation d'une première branche (82) de la boucle de fil de renforcement (80) à former au moyen d'un premier élément de serrage (K_{1,...,8}) sur le corps profilé (42, 102, 202, 302),
le déplacement du coulisseau (S) parallèlement à l'axe médian longitudinal (50, 116, 208, 320) du corps profilé (42, 102, 202, 302) pour produire la boucle de fil de renforcement (80),
la fixation d'une deuxième branche (84) de la boucle de fil de renforcement sur le corps profilé (42, 102, 202, 302) à l'aide d'un autre élément de serrage (K_{1,...,8}) positionné sur le corps profilé de manière espacée du premier élément de serrage (K_{1,...,8}) du côté périphérique, la séparation du fil de renforcement (72) tendu entre les éléments de serrage (K_{1,...,8}) pour produire la boucle de fil de renforcement (80) au moyen d'au moins un dispositif de séparation (T_{1,...,4}) de telle sorte qu'une aiguille et/ou un élément de préhension du système multi-aiguilles (12) puissent recevoir la boucle de fil renforcement (80),
l'avancement du fil renforcement (72),
la répétition des étapes a) à e).

12. Procédé selon la revendication 11, **caractérisé en ce que** le corps profilé (42, 102, 202, 302) est, pour l'avancement du fil renforcement (72) à l'étape de procédé e), tourné d'un pas angulaire de 360° divisé par n avec extraction simultanée du fil de renforcement (14, 80) d'un dispositif d'amenée (70), n étant un nombre naturel qui est supérieur ou égal à 2.

13. Procédé selon la revendication 11 ou 12, **caractérisé en ce que** le fil renforcement (14, 80) est, à l'étape de procédé d), fixé au corps profilé (42, 102, 202, 302) au moyen d'au moins un autre élément de serrage (K_{1,...,8}) avant la séparation.

14. Procédé selon l'une des revendications 11 à 13, **caractérisé en ce qu'**un déplacement axial (W) du coulisseau (S) à partir de sa position de repos jusqu'à atteindre la position de travail est réglé de telle sorte qu'une boucle de fil de renforcement (80) de longueur prédéfinie soit produite.
